# NEUE EUROPÄISCHE PATENTSCHRIFT

(11) **EP 2 239 172 B2**
(45) Veröffentlichungstag und Bekanntmachung des Hinweises auf die Entscheidung über den Einspruch: **30.08.2023**
(45) Hinweis auf die Patenterteilung: 16.03.2016
(21) Anmeldenummer: 10158972.9
(22) Anmeldetag: 01.04.2010
(51) Int. Cl.: B60T 7/10, B60T 7/12, B60T 17/18

(54) **Verfahren zum Betreiben einer Bremseinrichtung eines Haltestellen anfahrenden Kraftfahrzeugs**
Method for operating a brake device of a motor vehicle approaching a stop
Procédé de fonctionnement d'un dispositif de freinage d'un véhicule automobile pénétrant une zone de stationnement

(30) Priorität: 08.04.2009 DE 102009016982
(43) Veröffentlichungstag der Anmeldung: 13.10.2010
(73) Patentinhaber: KNORR-BREMSE Systeme für Nutzfahrzeuge GmbH, 80809 München (DE)
(72) Erfinder: Vollmer, Otto, 80689, München (DE); Pellecuer, Francois, 80333 München (DE)
(74) Vertreter: Wiedemann, Markus

(56) Entgegenhaltungen:
- EP-B1- 0 976 628
- EP-B1- 1 571 061
- WO-A1-2004/089711
- WO-A1-2006/010735
- WO-A2-02/08040
- AT-B- 292 489
- DE-A1- 3 621 076
- DE-A1- 10 233 018
- DE-A1- 10 324 723
- DE-A1- 10 324 808
- DE-A1- 10 336 611
- DE-A1-102006 055 569
- DE-A1-102007 014 427
- DE-C1- 19 619 641
- US-A- 4 817 502
- US-A1- 2003 132 049

## Beschreibung

### Stand der Technik

Die Erfindung geht aus von einem Verfahren zum Betreiben einer Bremseinrichtung eines Haltestellen anfahrenden Kraftfahrzeugs gemäß dem Oberbegriff von Anspruch 1 sowie von einer druckmittelbetätigten Bremseinrichtung eines solchen Kraftfahrzeugs gemäß dem Oberbegriff von Anspruch 3.

Heutige elektro-pneumatische Bremseinrichtungen von häufig Haltestellen anfahrenden Nutzfahrzeugen wie Omnibusse oder Müllfahrzeuge umfassen eine Betriebsbremseinrichtung, eine Feststellbremseinrichtung sowie eine Haltestellenbremseinrichtung, welche bei Betätigung eines Haltestellenbremsbetätigungsorgans durch den Fahrer Bremsaktuatoren der Betriebsbremseinrichtung wenigstens einer Achse mit einem vorbestimmten Bremsdruck zuspannt.

Eine solche Haltestellenbremseinrichtung, welche in Bezug zur Betriebsbremseinrichtung zusätzlich eine Haltestellenbremsfunktion zur Verfügung stellt, ist in der Regel zum Einsatz in Omnibussen oder Müllfahrzeugen vorgesehen und wird an den Haltestellen aktiviert bzw. zugespannt. Hierzu ist ein von Hand betätigbarer Schalter vorgesehen, bei dessen Betätigung ein konstanter Druck von vorbestimmter Größe in die Betriebsbremszylinder wenigstens einer Achse eingesteuert wird, um das Kraftfahrzeug an den Haltestellen einzubremsen. Im Gegensatz zu einer normalen, über ein Fußbremsventil ausgelösten Betriebsbremsung ist der Bremsdruck bei der Haltstellenbremsfunktion daher nicht durch den Fahrer dosierbar.

Eine solche sog. Haltestellenbremse wird in der DE 10 2007 001 708 A1 am Rande beschrieben, deren Gegenstand eine Rollbremsfunktion ist, bei welcher der beim Anhalten des Fahrzeugs ausgesteuerte Bremsdruck gehalten wird, der je nach der Bremssituation unterschiedlich ist.

Solche eingangs genannten druckmittelbetätigten Bremseinrichtungen weisen zumeist an den Rädern der Hinterachse sog. Kombizylinder als Kombination eines druckluftbetätigten Betriebsbremszylinders und eines druckluftbetätigten Federspeicherbremszylinders auf, wobei der Betriebsbremszylinder als aktiver Bremszylinder belüftet die Betriebsbremse zuspannt und diese entlüftet löst und der Federspeicherbremszylinder als passiver Bremszylinder belüftet die Feststellbremse löst und diese entlüftet zuspannt. Folglich wird der Betriebsbremszylinder für die Betriebsbremse und der Federspeicherbremszylinder für die Feststellbremse solcher Fahrzeuge verwendet, wobei die Betriebsbremse dazu dient, das Fahrzeug ausgehend vom fahrenden Zustand einzubremsen und die Feststellbremse, das bereits eingebremste Fahrzeug für einen längerem Stillstand im eingebremsten Zustand zu halten.

Da zum Lösen der Feststellbremse eine gewisse Menge an Druckluft in den Federspeicherbremszylindern notwendig ist und die Bereitstellung eine gewisse Zeit erfordert, ermöglicht die Haltebremse ein schnelleres Lösen als sie auf die Bremsaktuatoren der aktiven Betriebsbremse wirkt, welche zum Lösen lediglich entlüftet werden müssen. Ein weiterer Vorteil der Haltebremse liegt im Hinblick auf häufiges Halten und Einbremsen für kurze Zeit, wie es bei Omnibussen und Müllfahrzeugen vorkommt, darin, dass der Luftverbrauch gegenüber der Feststellbremse reduziert ist.

Da die Haltebremse demnach auf die Betriebsbremszylinder wirkt, ist ihre Funktion vom Vorratsdruck des jeweiligen Haltestellenbremskreises abhängig. Wenn dieser Vorratsdruck unter einen vorbestimmten Grenzwert fällt, so kann das Fahrzeug unbeabsichtigt wegrollen. Dies ist insbesondere dann kritisch, wenn der Fahrer das Fahrzeug lediglich mit zugespannter Haltebremse abstellt und nicht, wie vorgeschrieben, mit zugespannter Feststellbremse. Dann besteht die Gefahr, dass das Fahrzeug bei einem Druckluftverlust im Bremskreis wegrollt.

Die WO 2006/010 735 A1 betrifft Personenkraftwagen mit hydraulischer Betriebsbremse und elektrischer Feststellbremse, wobei die elektrische Feststellbremse in jedem Fall zugespannt wird, in welchem der überwachte Bremsdruck der hydraulischen Betriebsbremse kleiner als ein vorgegebener Grenzbremsdruck ist. Solche elektrischen Feststellbremsen haben gegenüber pneumatischen Federspeicherbremsen eine höhere Dynamik und können mit geringerem Energieverbrauch und schneller zugespannt und gelöst werden als pneumatische Federspeicherbremsen.

Gemäß US 2003/132049 A1 wird ein Bus mit einem Rollstuhllift und einer zusätzlich zur Betriebsbremseinrichtung vorhandenen Feststellbremseinrichtung in Form von passiven Federspeicherbremszylindern beschrieben. Eine Sicherheitsschaltung sieht vor, dass der Rollstuhllift nur dann betrieben werden kann, wenn unter anderem der Bremsdruck in den Federspeicherbremszylindern kleiner als ein vorgegebener Druckwert ist.

Der vorliegenden Erfindung liegt die Aufgabe zugrunde, eine druckmittelbetätigte Bremseinrichtung der eingangs erwähnten Art derart fortzubilden, dass sie eine höhere Funktionssicherheit aufweist. Weiterhin soll ein Verfahren zum Betreiben einer solchen druckmittelbetätigten Bremseinrichtung angegeben werden.

Diese Aufgabe wird erfindungsgemäß durch die Merkmale von Anspruch 1 und von Anspruch 3 gelöst.

### Offenbarung der Erfindung

Erfindungsgemäß wird ein Verfahren nach Anspruch 1 vorgeschlagen.

Erfindungsgemäß wird auch eine Bremseinrichtung nach Anspruch 3 vorgeschlagen.

Damit wird sichergestellt, dass das Fahrzeug durch die Feststellbremse im eingebremsten Zustand gehalten bzw. in den eingebremsten Zustand gebracht wird, auch wenn der Druck im Haltestellenbremskreis abfällt bzw. unter den vorbestimmten Grenzdruck abgefallen ist. Dies resultiert in einer vorteilhaft höheren Funktionssicherheit der Bremseinrichtung.

Durch die in den Unteransprüchen aufgeführten Maßnahmen sind vorteilhafte Weiterbildungen und Verbesserungen der in den unabhängigen Ansprüchen angegebenen Erfindung möglich.

Gemäß meiner bevorzugten Ausführungsform der erfindungsgemäßen Bremseinrichtung ist die Steuereinrichtung eine elektronische Steuereinrichtung und das von ihr ausgegebene Zuspannsignal ein elektrisches Signal.

Weiterhin ist die Bremseinrichtung bevorzugt ein elektronisch geregeltes Bremssystem (EBS), mit einem elektronischen Steuergerät, in welches die elektronische Steuereinrichtung integriert ist.

Die Feststellbremseinrichtung als Bestandteil einer erfindungsgemäßen Bremseinrichtung ist bevorzugt eine elektro-pneumatische Feststellbremseinrichtung, wobei die Federspeicherbremszylinder der Feststellbremseinrichtung abhängig von dem von der Steuereinrichtung ausgesteuerten elektrischen Zuspannsignal gesteuert werden. Solche elektro-pneumatischen Feststellbremseinrichtung, bei welchen abhängig von elektrischen Signalen eines Handbetätigungsorgans elektropneumatische Ventile (Magnetventile) angesteuert werden, um die Federspeicherbremszylinder als Feststellbremsaktuatoren zuzuspannen bzw. zu lösen, werden heutzutage verstärkt eingesetzt.

Alternativ, nämlich bei rein pneumatischen Feststellbremseinrichtungen, bei welchen das Handbetätigungsorgan rein pneumatische Ventile einer Feststellbremsventileinrichtung mechanisch steuert, kann eine von dem elektrischen Zuspannsignal ansteuerbare Ventileinrichtung vorgesehen sein, welche in wenigstens eine Vorratsluftleitung zwischen wenigstens einem Druckluftvorrat und die durch das Handbetätigungsorgan betätigbaren Feststellbremsventileinrichtung geschaltet sein. Dabei sperrt diese Ventileinrichtung bei Vorliegen des Zuspannsignals die wenigstens eine Vorratsluftleitung und verbindet die Federspeicherbremszylinder mit einer Drucksenke. Bei Abwesenheit des Zuspannsignals wird die Ventileinrichtung dagegen federbelastet in eine Durchschaltposition geschaltet, in welcher die wenigstens eine Vorratsluftleitung zu der Feststellbremsventileinrichtung durchgeschaltet ist.

Diese Ventileinrichtung beinhaltet bevorzugt wenigstens ein Elektromagnetventil, welches von dem Zuspannsignal der Steuereinrichtung elektrisch gesteuert ist.

Die Haltestellenbremseinrichtung beinhaltet beispielsweise wenigstens ein elektrische Signale aussteuerndes, handbetätigtes Schaltorgan sowie wenigstens ein von dem Schaltorgan steuerbares Magnetventil, welches abhängig von den elektrischen Signalen den im Rahmen der Haltestellenbremsfunktion vorbestimmten Bremsdruck direkt oder indirekt auf Betriebsbremszylinder der Betriebsbremseinrichtung weiterschaltet.

Zur Steuerung größerer Luftmengen kann in dem Haltestellenbremskreis auch ein Relaisventil vorgesehen sein, wobei das Magnetventil abhängig von den elektrischen Signalen des handbetätigten Schaltorgans den im Rahmen der Haltestellenbremsfunktion vorbestimmten Bremsdruck auf einen pneumatischen Steuereingang des Relaisventils schaltet, dessen Vorratsanschluss mit einem Druckluftvorrat der Betriebsbremseinrichtung und dessen Arbeitsanschluss mit den Betriebsbremszylindern der Betriebsbremseinrichtung verbunden ist.

Gemäß einer Weiterbildung des der Erfindung zugrunde liegenden Verfahrens zum Betreiben einer oben beschriebenen Bremseinrichtung kann vorgesehen sein, dass zusätzlich zu den kumulativ gemäß der Ziffern a) bis d) von Anspruch 1 zu erfüllenden Bedingungen erst dann von der elektronischen Steuereinrichtung das Zuspannsignal zum automatischen Zuspannen der Feststellbremse ausgegeben wird, wenn die Betriebsbremse nicht zugespannt ist, d.h. wenn sich die Betriebsbremszylinder der Vorderachse bzw. der Hinterachse in gelöstem Zustand befinden.

Gemäß dem Verfahren ist vorgesehen, dass das Zuspannsignal zum Zuspannen der Feststellbremse zeitlich verzögert ausgegeben wird. Dies ist insbesondere dann von Vorteil, wenn sich der überwachte Bremsdruck nach einem Auslösen der Haltstellenbremsfunktion nicht schnell genug aufbaut und dadurch bereits die Feststellbremse automatisch zugespannt wird, obwohl kurz danach ein den Grenzdruck übersteigender Bremsdruck vorliegt. Ein solches zeitverzögertes Ausgeben des Zuspannsignals für die Feststellbremse verhindert folglich, dass die Feststellbremse unnötig zugespannt wird, da, wenn auch zeitlich verzögert, ein genügend großer Bremsdruck im Haltestellenbremskreis vorhanden ist.

Die Haltestellenbremseinrichtung umfasst ein einer Achse oder einem Rad des Fahrzeugs zugeordnetes Druckregelmodul, welches bei Betätigung des Haltestellenbremsbetätigungsorgans durch den Fahrer den vorbestimmten Bremsdruck für die Bremsaktuatoren der Betriebsbremseinrichtung erzeugt. In diesem Fall ist die Steuereinrichtung vorteilhaft in ein elektronisches Steuergerät des Druckregelmoduls oder in ein Bremssteuergerät integriert.

Genaueres geht aus der folgenden Beschreibung eines Ausführungsbeispiels hervor.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: ein schematisches Schaltbild einer druckmittelbetätigten Bremseinrichtung gemäß einer bevorzugten Ausführungsform der Erfindung;
- Fig.2: ein in den Feststellbremskreis der Bremseinrichtung von Fig.1 geschaltetes Magnetventil;
- Fig.3: ein Ablaufplan eines Verfahrens zur Steuerung der Bremseinrichtung von Fig.1;
- Fig.4: ein Ablaufplan einer weiteren Ausführungsform eines Verfahrens zur Steuerung der Bremseinrichtung von Fig.1;
- Fig.5: ein Ablaufplan einer weiteren Ausführungsform eines Verfahrens zur Steuerung der Bremseinrichtung von Fig.1.

### Beschreibung der Ausführungsbeispiele

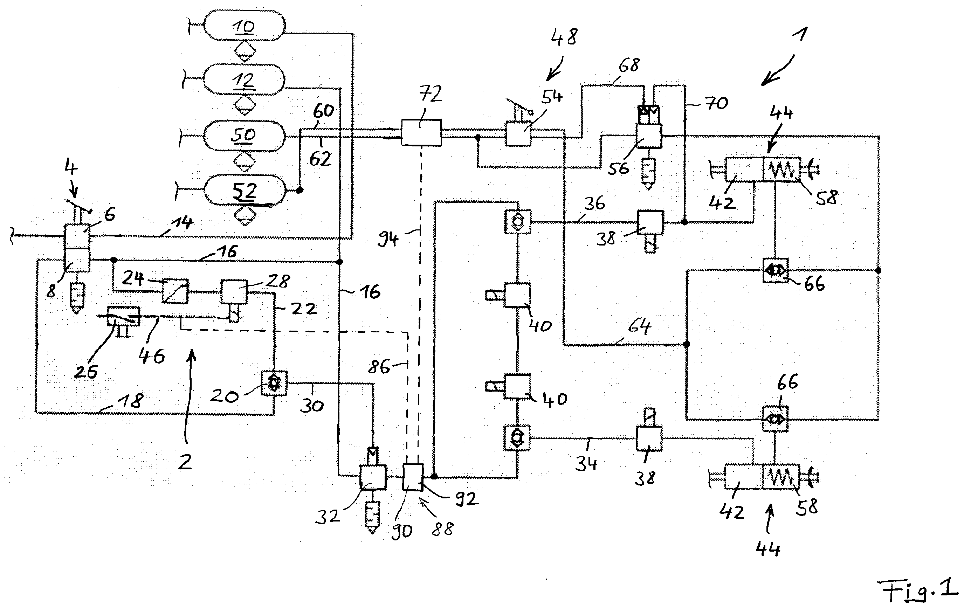

Der in Fig.1 gezeigte Ausschnitt eines schematischen Schaltbilds einer Bremseinrichtung 1 eines Omnibusses beschränkt sich auf die für die Erfindung wesentlichen Baugruppen und Bauelemente bzw. mit diesen zusammen wirkenden Komponenten.

Die Bremseinrichtung 1 des Ausführungsbeispiels ist mit Ausnahme einer Haltestellenbremseinrichtung 2 pneumatisch gesteuert und betätigt und verfügt über ABS-Funktionalitäten. Alternativ kann die Bremseinrichtung 1 auch eine elektro-pneumatische Bremseinrichtung oder auch ein elektronisch geregeltes Bremssystem (EBS) sein.

Demzufolge verfügt die Bremseinrichtung 1 über ein beispielsweise zweikanaliges, mit dem Fuß des Fahrers betätigbares Betriebsbremsventil 4, wobei ein Vorderachskanal 6 des Betriebsbremsventils 4 einem Vorderachsbetriebsbremskreis und ein Hinterachskanal 8 einem Hinterachsbetriebsbremskreis und einem Haltstellenbremskreis bzw. der Haltestellenbremseinrichtung 2 zugeordnet ist. Hierzu ist ein Eingang des Vorderachskanals 6 des Betriebsbremsventils 4 mit einem Vorderachs-Druckluftvorrat 10 und ein Eingang des Hinterachskanals 8 mit einem Hinterachs-Druckluftvorrat 12 jeweils über eine Vorratsleitung 14, 16 verbunden.

Andererseits steht ein Ausgang des Vorderachskanals 6 des Betriebsbremsventils 4 mit hier nicht gezeigten Bremsaktuatoren der Vorderachse und ein Ausgang des Hinterachskanals 8 des Betriebsbremsventils 4 über eine Druckleitung 18 mit einem Eingang eines Wechselventils 20 in Verbindung, dessen weiterer Eingang mit einer Druckleitung 22 des Haltestellenbremskreises oder der Haltestellenbremseinrichtung 2 verbunden ist. Diese Druckleitung 22 der Haltestellenbremseinrichtung 2 ist an den Eingang des Hinterachskanals 8 bzw. an die dem Hinterachsbremskreis zugeordnete Vorratsleitung 16 angeschlossen, mit welcher auch der Hinterachs-Druckluftvorrat 12 in Verbindung steht.

Die Haltestellenbremseinrichtung 2 beinhaltet einen in die Druckleitung 22 geschalteten Druckbegrenzer 24 sowie ein von einem beispielsweise elektrischen Schalter 26 elektrisch betätigbares Magnetventil 28. Das Wechselventil 20 ist ausgebildet, um den größeren der an seinen Eingängen anstehenden Drücke an seinen Ausgang zu leiten, welcher über eine pneumatische Steuerleitung 30 mit einem pneumatischen Steuereingang eines Relaisventils 32 der Haltestellenbremseinrichtung 2 in Verbindung steht. Ein Vorratsanschluss dieses Relaisventils ist über die Vorratsleitung 16 mit dem Hinterachs-Druckluftvorrat 12 verbunden. Der Arbeitsanschluss der Relaisventils 32 ist an Bremsleitungen 34, 36 für die rechte Seite und die linke Seite angeschlossen, in welche jeweils ein ABS-Ventil 38, ein ASR-Ventil 40 sowie je ein Betriebsbremszylinder 42 eines Kombizylinders 44 geschaltet sind.

Der Hinterachsbetriebsbremskreis umfasst folglich den Hinterachs-Druckluftvorrat 12, den Hinterachskanal 8 des Betriebsbremsventils 4, das Relaisventil 32, die ABS-/ASR-Ventile 38, 40 und die Betriebsbremszylinder 42. Zusammen mit den hier nicht gezeigten Komponenten des Vorderachsbetriebsbremskreises bilden die Komponenten des Hinterachsbetriebsbremskreises eine Betriebsbremseinrichtung einer Betriebsbremse des Omnibusses, welche dazu benutzt wird, das in Fahrt befindliche Fahrzeug einzubremsen, wie eingangs bereits beschrieben wurde.

Der Haltestellenbremskreis bzw. die Haltestellenbremseinrichtung 2, welche mit dem Hinterachsbetriebsbremskreis zusammen wirkt bzw. sich mit diesem überschneidet, beinhaltet den Schalter 26 als Haltestellenbremsenbetätigungsorgan, den Druckbegrenzer 24 sowie das vom Schalter 26 über eine elektrische Steuerleitung 46 elektrisch betätigte Magnetventil 28 und wirkt auf den Hinterachsbetriebsbremskreis, wenn der Fahrer den Schalter 26 betätigt. Dann nämlich steuert das Magnetventil 28 einen durch den Druckbegrenzer 24 konstant gehaltenen Druck in den einen Eingang des Wechselventils 20 ein, welches diesen Druck an die Betriebsbremszylinder 42 weiter leitet, falls der vom Hinterachskanal 8 des Betriebsbremsventils 4 in der Druckleitung 18 erzeugte und an dem anderen Eingang des Wechselventils 20 anstehende Druck kleiner ist, woraufhin die Betriebsbremszylinder 42 im Rahmen einer durch den Schalter 26 ausgelösten Haltestellenbremsung zuspannen.

Weiterhin ist eine Feststellbremseinrichtung 48 mit einem Feststellbremskreis vorhanden, welche zwei Feststellbrems-Druckluftvorräte 50, 52, ein Handbremsventil 54, ein Relaisventil 56 sowie Federspeicherbremszylinder 58 der rechts- und linksseitigen Kombizylinder 44 umfasst. Dabei steht das von Hand betätigbare Hansbremsventil 54 eingangseitig über jeweils eine Vorratsleitung 60, 62 mit je einem Feststellbrems-Druckluftvorrat 50, 52 und ausgangsseitig über eine Druckleitung 64 mit je einem Eingang eines rechtsseitigen bzw. linksseitigen Wechselventils 66 und über eine weitere Druckleitung 68 mit einem pneumatischen Steuereingang des Relaisventils 56 in Verbindung. Ein weiterer pneumatischer Steuereingang des Relaisventils 56 ist über eine Steuerleitung 70 an die Bremsleitung 36 beispielsweise des rechten Hinterrades und sein Arbeitsanschluss an den jeweils anderen Eingang der Wechselventile 66 angeschlossen, deren Ausgang jeweils mit dem zugeordneten Federspeicherbremszylinder 58 verbunden ist.

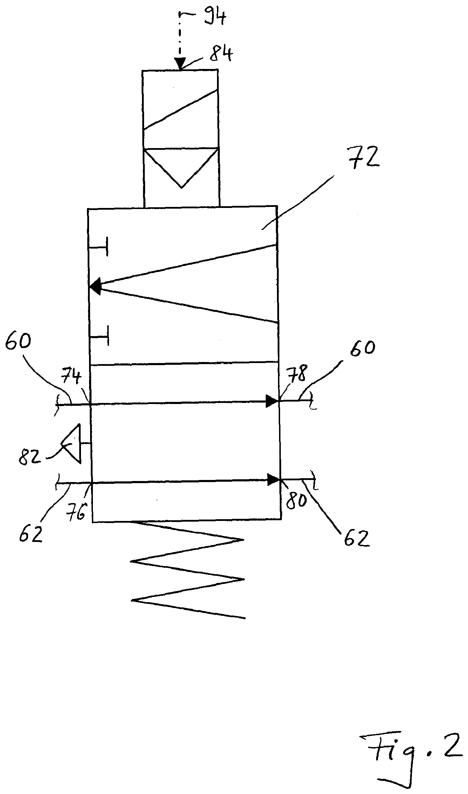

In die von den Feststellbrems-Druckluftvorräten 50, 52 zu dem Handbremsventil 54 führenden Vorratsleitungen 60, 62 ist das in Fig.2 gezeigte elektrisch gesteuerte Magnetventil 72 geschaltet, das beispielsweise als federbelastetes 5/2-Wege-Magnetventil ausgeführt ist. Ein Eingang 74 des Magnetventils 72 ist dabei über die Vorratsleitung 60 an den einen Feststellbrems-Druckluftvorrat 52 und der andere Eingang 76 über die Vorratsleitung 62 an den anderen Feststellbrems-Druckluftvorrat 50 angeschlossen, während ein Ausgang 78 die Vorratsleitung 60 und ein weiterer Ausgang 80 die Vorratsleitung 62 bis zum Handbremsventil 54 verbindet. In einer ersten, unbestromten und federbelasteten Schaltstellung verbindet das 5/2-Wege-Magnetventil 72 seine beiden Eingänge 74, 76 mit seinen beiden Ausgängen 78, 80, wodurch die Druckluft in den Vorratsleitungen 60, 62 lediglich durchgeschleift wird. Bestromt werden die beiden mit dem Handbremsventil 54 verbundenen Ausgänge 78, 80 hingegen mit einer Drucksenke, insbesondere mit einem Entlüftungsanschluss 82 des Magnetventils 72 verbunden und seine beiden Eingänge 74, 76 gesperrt, wodurch die beiden Feststellbrems-Druckluftvorräte gegen Ausströmen gesichert sind und die mit dem Handbremsventil 54 verbundenen Abschnitte der Vorratsleitungen 60, 62 entlüftet werden.

Wie aus Fig.1 hervorgeht, ist ein elektrischer Steuereingang 84 des 5/2-Wege-Magentventils 72 über eine elektrische Steuerleitung 86 mit einer Baueinheit 88 verbunden, welche einen Drucksensor 90 sowie eine elektronische Steuereinrichtung 92 enthält. Alternativ können der Drucksensor 90 und die Steuereinrichtung selbstverständlich auch getrennt angeordnet sein. Der Drucksensor 90 misst den Druck am Arbeitsanschluss des Relaisventils des Hinterachsbremskreises, mithin also den Bremsdruck des Betriebsbremskreises der Hinterachse in den Bremsleitungen 34, 36, wie er ohne aktivierte ABS-Funktion unverändert in die Betriebsbremszylinder 42 der Hinterachse eingesteuert wird.

Falls die Bremseinrichtung 1 ein elektronisch geregeltes Bremssystem (EBS), mit einem elektronischen EBS-Steuergerät ist, kann die elektronische Steuereinrichtung 92 auch in das EBS-Steuergerät integriert sein.

Vor diesem Hintergrund ist die Funktionsweise der Bremseinrichtung 1, insbesondere der Haltestellenbremseinrichtung 2 wie folgt:
Gemäß eines Verfahrens, welches die funktionale Sicherheit der Bremseinrichtung 1 erhöht, wird unter anderem
a) der Bremsdruck in den Betriebsbremszylindem 42 wenigstens der Hinterachse durch den Drucksensor 90 überwacht, welche im Falle einer Aktivierung der Haltestellenbremsfunktion zugespannt werden, und
b) falls die Haltestellenbremsfunktion durch eine Betätigung des Schalters 26 aktiviert ist, und
c) der durch den Drucksensor 90 überwachte Bremsdruck kleiner als ein vorgegebener Grenzbremsdruck ist, sowie
d) die Feststellbremse gelöst ist,
e) von der elektronischen Steuereinrichtung 92 ein Zuspannsignal zum automatischen Zuspannen der Feststellbremse ausgegeben.

Dieses Zuspannsignal zum automatischen Zuspannen der Feststellbremse wird über eine elektrische Steuerleitung 94 in den Steuereingang 84 des 5/2-Wege-Magnetventils 72 eingesteuert, woraufhin dieses von seiner federbelasteten Grundstellung in die Stellung umschaltet, in welcher seine beiden an das Handbremsventil 54 angeschlossenen Ausgänge 78, 80 mit seinem Entlüftungsanschluss 82 verbunden werden. Daraufhin sinkt der Druck in der zu den Federspeicherbremszylindern 58 der Hinterachse führenden Druckleitung 64 sowie in der zu dem Relaisventil 56 führenden Druckleitung 68, woraufhin die Federspeicherbremszylinder 58 entlüftet werden und somit zuspannen.

Wenn daher der Druck im Hinterachs-Druckluftvorrat 12 oder in der Vorratsleitung 16 abfällt, beispielsweise infolge eines Lecks, fällt auch der Druck in den Druckleitungen 18 und 22 sowie in der Steuerleitung 30 ab, so dass auch am Arbeitsanschluss des Relaisventils 32 bzw. an dem diesem in Strömungsrichtung nachgeordneten Drucksensor 90 und damit auch in den zu den Betriebsbremszylindern 42 führenden Bremsleitungen 34, 36 ein Druck ansteht, welcher kleiner als der vorgegebene Grenzdruck ist. Folglich kann das Fahrzeug weder mit der Betriebsbremse noch mit der Haltestellenbremse abgebremst oder im eingebremsten Zustand gehalten werden. Dann wird das Zuspannsignal zum Zuspannen der Feststellbremse erzeugt.

Da auf ein automatisches Zuspannen der Feststellbremse verzichtet werden kann, falls die Betriebsbremse intakt und durch Betätigung des Betriebsbremsventils 4 zugespannt ist, dadurch über die Druckleitung 18 das Relaisventil 32 angesteuert werden kann, um in den Betriebsbremszylindern 42 ausreichenden Bremsdruck zu erzeugen, kann gemäß einer Weiterbildung des Verfahrens vorgesehen sein, dass zusätzlich zu den kumulativ gemäß der obigen Ziffern a) bis d) zu erfüllenden Bedingungen erst dann von der elektronischen Steuereinrichtung 92 das Zuspannsignal zum automatischen Zuspannen der Feststellbremse ausgegeben wird, wenn die intakte Betriebsbremse nicht betätigt bzw. nicht zugespannt ist, d.h. wenn sich die Betriebsbremszylinder 42 der Vorderachse bzw. der Hinterachse in gelöstem Zustand befinden.

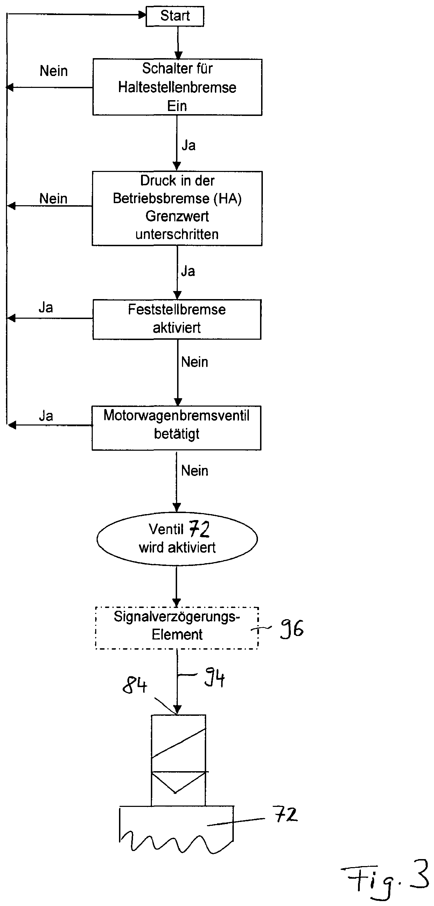

Dieses Verfahren bzw. dieser in der Steuereinrichtung 92 implementierte Programmablauf ist in dem Ablaufplan von Fig.3 dargestellt, in welchem ausgehend von "Start" der momentane Zustand der Bremseinrichtung 1 abgefragt wird und bei positiver Antwort "Ja" auf die Abfragen bzw. Bedingungen "Schalter für Haltestellenbremse EIN", "Druck in der Betriebsbremse der Hinterachse HA Grenzwert unterschritten", bzw. bei einer negativen Antwort "Nein" auf die Abfragen "Feststellbremse aktiviert" und "Motorwagenbremsventil (Betriebsbremsventil) betätigt" hin das Magnetventil 72 geschaltet bzw. aktiviert wird, um die Feststellbremse zuzuspannen. Hingegen wird bei nur einer gegenteiligen Antwort das Programm zum Start rückgeschleift und das Magnetventil 72 nicht aus seiner federbelasteten Grundstellung umgeschaltet.

Gemäß einer Ausführungsform des Verfahrens kann vorgesehen sein, dass das Zuspannsignal zum Zuspannen der Feststellbremse an das Magnetventil 72 zeitlich verzögert ausgegeben wird. Hierzu ist in Fig.3 symbolisch ein Signalverzögerungselement 96 in den Ablaufplan integriert, welches dann das von der elektronischen Steuereinrichtung 92 ausgegebene Zuspannsignal verzögert an den Steuereingang 84 des Magnetventils 72 aussteuert. Dies ist insbesondere dann von Vorteil, wenn sich der vom Drucksensor 90 überwachte Bremsdruck nach einem Auslösen der Haltstellenbremsfunktion durch den Schalter 26 nicht schnell genug aufbaut und dadurch bereits die Feststellbremse automatisch zugespannt wird, obwohl kurz danach ein den Grenzdruck übersteigender Bremsdruck vorliegt. Ein solches zeitverzögertes Ausgeben des Zuspannsignals für die Feststellbremse verhindert folglich, dass die Feststellbremse unnötig zugespannt wird, da, wenn auch zeitlich verzögert, ein genügend großer Bremsdruck im Haltestellenbremskreis vorhanden ist.

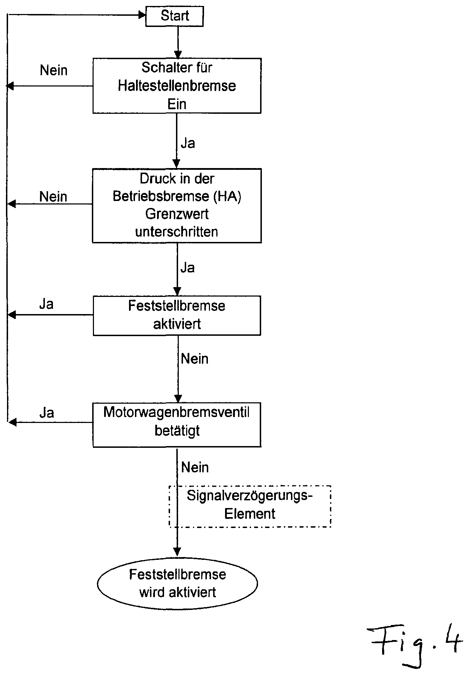

Die Feststellbremseinrichtung 48 könnte anstatt wie in Fig.1 rein pneumatisch gesteuert auch eine elektro-pneumatische Feststellbremseinrichtung sein. Bei solchen elektro-pneumatischen Feststellbremseinrichtungen werden abhängig von elektrischen Signalen eines Handbetätigungsorgans elektropneumatische Ventile (Magnetventile) angesteuert, um die Federspeicherbremszylinder 58 zuzuspannen bzw. zu lösen. In diesem Fall wird das Zuspannsignal zum Zuspannen der Feststellbremse nicht in ein Magnetventil, sondern direkt beispielsweise in das Steuergerät oder in das Betätigungsorgan der elektro-pneumatischen Feststellbremseinrichtung eingesteuert. Dieser Sachverhalt wird durch Fig.4 veranschaulicht.

Gemäß einer Ausführungsform umfasst die Haltestellenbremseinrichtung ein einer Achse oder einem Rad des Fahrzeugs zugeordnetes Druckregelmodul, welches bei Betätigung des Haltestellenbremsbetätigungsorgans durch den Fahrer den vorbestimmten Bremsdruck für die Bremsaktuatoren der Betriebsbremseinrichtung erzeugt. In diesem Fall kann die Steuereinrichtung 92 vorteilhaft in ein elektronisches Steuergerät des Druckregelmoduls oder in ein Bremssteuergerät integriert sein.

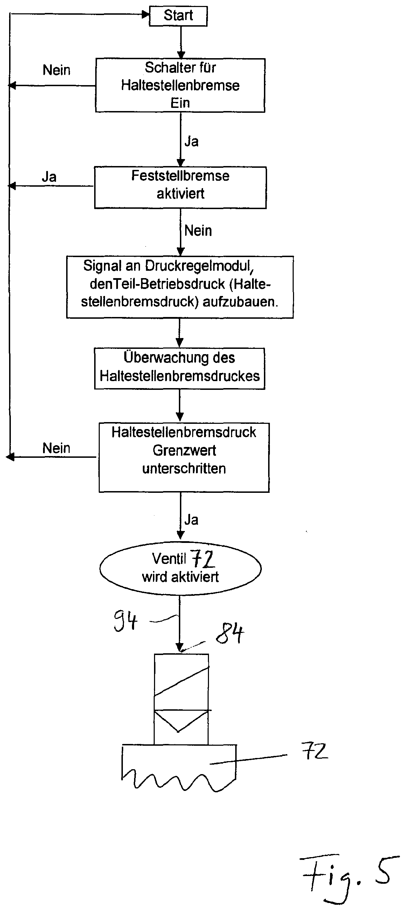

Dieses Verfahren bzw. dieser in der Steuereinrichtung 92 implementierte Programmablauf ist in dem Ablaufplan von Fig.5 dargestellt, in welchem ausgehend von "Start" der momentane Zustand der Bremseinrichtung 1 abgefragt wird und bei positiver Antwort "Ja" auf die Abfragen bzw. Bedingungen "Schalter für Haltestellenbremse EIN" bzw. bei einer negativen Antwort "Nein" auf die Abfragen "Feststellbremse aktiviert" von der Steuereinrichtung 92 ein Signal an das Druckregelmodul, vorzugsweise an ein 2-Kanal-Druckregelmodul der Hinterachse ausgesteuert wird, um einen vorbestimmten Betriebsbremsdruck im Rahmen der Haltestellenbremsfunktion für die dem Druckregelmodul zugeordneten Betriebsbremszylinder 42 zu erzeugen. Anschließend wird wiederum mittels wenigstens eines Drucksensors 90 überwacht, ob der vom Druckregelmodul erzeugte vorbestimmte Betriebsbremsdruck oder Haltestellenbremsdruck kleiner als der vorgegebene Grenzbremsdruck ist. Falls dies der Fall ist, wird beispielsweise wiederum ein elektro-magnetisches Ventil 72 so geschaltet, dass die Feststellbremse zugespannt wird. Hingegen wird bei nur einer gegenteiligen Antwort das Programm zum Start rückgeschleift und das Magnetventil 72 nicht aus seiner federbelasteten Grundstellung umgeschaltet.

### Bezugszeichenliste

- 1: Bremseinrichtung
- 2: Haltestellenbremseinrichtung
- 4: Betriebsbremsventil
- 6: Vorderachskanal
- 8: Hinterachskanal
- 10: Vorderachs-Druckluftvorrat
- 12: Hinterachs-Druckluftvorrat
- 14: Vorratsleitung
- 16: Vorratsleitung
- 18: Druckleitung
- 20: Wechselventil
- 22: Druckleitung
- 24: Druckbegrenzer
- 26: Schalter
- 28: Magnetventil
- 30: Steuerleitung
- 32: Relaisventil
- 34: Bremsleitung
- 36: Bremsleitung
- 38: ABS-Ventil
- 40: ASR-Ventil
- 42: Betriebsbremszylinder
- 44: Kombizylinder
- 46: Steuerleitung
- 48: Feststellbremseinrichtung
- 50: Feststellbrems-Druckluftvorrat
- 52: Feststellbrems-Druckluftvorrat
- 54: Handbremsventil
- 56: Relaisventil
- 58: Federspeicherbremszylinder
- 60: Vorratsleitung
- 62: Vorratsleitung
- 64: Druckleitung
- 66: Wechselventil
- 68: Druckleitung
- 70: Steuerleitung
- 72: Magnetventil
- 74: Eingang
- 76: Eingang
- 78: Ausgang
- 80: Ausgang
- 82: Entlüftungsanschluss
- 84: Steuereingang
- 86: Steuerleitung
- 88: Baueinheit
- 90: Drucksensor
- 92: elektronische Steuereinrichtung
- 94: Steuerleitung
- 96: Signalverzögerungselement

## Patentansprüche

1. Verfahren zum Betreiben einer Bremseinrichtung (1) eines Haltestellen anfahrenden Kraftfahrzeugs mit einer Betriebsbremse (42) und einer Feststellbremse (58) sowie mit einer in Bezug zu einer Betriebsbremsfunktion zusätzlichen Haltestellenbremsfunktion, welche bei Aktivierung durch den Fahrer die Betriebsbremse wenigstens einer Achse mit einem vorbestimmten Bremsdruck zuspannt, wobei wenigstens einige der Bremsaktuatoren (58) der Feststellbremse pneumatisch betätigte Federspeicherbremszylinder sind, **dadurch gekennzeichnet, dass**
a) der Bremsdruck in den Radbremsen (42) wenigstens der Achse überwacht wird, deren Radbremsen (42) im Falle einer Aktivierung der Haltestellenbremsfunktion zugespannt werden, und
b) falls die Haltestellenbremsfunktion aktiviert ist, und
c) der überwachte Bremsdruck kleiner als ein vorgegebener Grenzbremsdruck ist, sowie
d) die Feststellbremse (58) gelöst ist,
e) ein Zuspannsignal zum automatischen Zuspannen der Feststellbremse (58) ausgegeben wird, wobei
f) das Zuspannsignal zum automatischen Zuspannen der Feststellbremse (58) zeitlich verzögert ausgegeben wird.

2. Verfahren nach Anspruch 1, **dadurch gekennzeichnet, dass** zusätzlich zu den kumulativ gemäß der Buchstaben a) bis d) von Anspruch 1 zu erfüllenden Bedingungen erst dann das Zuspannsignal zum automatischen Zuspannen der Feststellbremse (58) ausgegeben wird, wenn die Betriebsbremse (42) nicht zugespannt ist.

3. Bremseinrichtung (1) eines Haltestellen anfahrenden Kraftfahrzeugs mit einer Betriebsbremseinrichtung, einer Feststellbremseinrichtung (48) sowie mit einer Haltestellenbremseinrichtung (2), welche bei Betätigung eines Haltestellenbremsbetätigungsorgans (26) durch den Fahrer Bremsaktuatoren (42) der Betriebsbremseinrichtung wenigstens einer Achse mit einem vorbestimmten Bremsdruck zuspannt, wobei wenigstens einige der Bremsaktuatoren (58) der Feststellbremseinrichtung (48) pneumatisch betätigte Federspeicherbremszylinder sind, **gekennzeichnet durch**
a) wenigstens eine Sensoreinrichtung (90) zum Überwachen des Bremsdrucks in wenigstens einem Bremsaktuator (42) der Betriebsbremseinrichtung der wenigstens einen Achse, sowie durch
b) eine derart ausgelegte Steuereinrichtung (92) zur Steuerung wenigstens der Feststellbremseinrichtung (48), dass
c) falls das Haltestellenbremsenbetätigungsorgan (26) betätigt ist, und
d) der von der Sensoreinrichtung (90) überwachte Bremsdruck kleiner als ein vorgegebener Grenzbremsdruck ist, und
e) die Bremsaktuatoren (58) der Feststellbremseinrichtung (48) gelöst sind,
f) von der Steuereinrichtung (92) ein Zuspannsignal zum automatischen Zuspannen der Bremsaktuatoren (58) der Feststellbremseinrichtung (48) ausgegeben wird, wobei
g) die Haltestellenbremseinrichtung (2) ein einer Achse oder einem Rad des Fahrzeugs zugeordnetes Druckregelmodul umfasst, welches bei Betätigung des Haltestellenbremsbetätigungsorgans durch den Fahrer den vorbestimmten Bremsdruck für die Bremsaktuatoren (42) der Betriebsbremseinrichtung erzeugt.

4. Bremseinrichtung nach Anspruch 3, **dadurch gekennzeichnet, dass** die Steuereinrichtung (92) eine elektronische Steuereinrichtung und das von ihr ausgegebene Zuspannsignal ein elektrisches Signal ist.

5. Bremseinrichtung nach Anspruch 4, **dadurch gekennzeichnet, dass** sie ein elektronisch geregeltes Bremssystem (EBS) ist, mit einem elektronischen EBS-Steuergerät, in welches die elektronische Steuereinrichtung (92) integriert ist.

6. Bremseinrichtung nach einem der Ansprüche 3 bis 5, **dadurch gekennzeichnet, dass** die Feststellbremseinrichtung (48) eine elektropneumatische Feststellbremseinrichtung ist und die Federspeicherbremszylinder (58) der Feststellbremseinrichtung (48) abhängig von dem von der Steuereinrichtung (92) ausgesteuerten elektrischen Zuspannsignal gesteuert werden.

7. Bremseinrichtung nach einem der vorhergehenden Ansprüche, **dadurch gekennzeichnet, dass** die Steuereinrichtung (92) in ein elektronisches Steuergerät des Druckregelmoduls oder in ein Bremssteuergerät integriert ist.

## Claims

1. Method for operating a brake device (1) of a motor vehicle approaching stops, the motor vehicle having a service brake (42) and a parking brake (58) as well as a stop braking function, which is provided in addition to a service braking function and which, if activated by the driver, applies the service brake of at least one axle with a predetermined brake pressure, wherein at least some of the brake actuators (58) of the parking brake are pneumatically actuated spring brake cylinders, **characterised in that**
a) the brake pressure is monitored in the wheel brakes (42) of at least that axle the wheel brakes (42) of which are applied in response to an activation of the stop braking function, and
b) if the stop braking function is activated, and if
c) the monitored brake pressure is below a predetermined limit brake pressure, and if
d) the parking brake (58) is released,
e) an application signal is output for the automatic application of the parking brake (58), wherein
f) the application signal for the automatic application of the parking brake (58) is output with a time delay.

2. Method according to claim 1, **characterised in that,** in addition to the conditions to be met cumulatively according to items a) to d) of claim 1, the application signal for the automatic application of the parking brake (58) is output only if the service brake (42) is not applied.

3. Brake device (1) of a motor vehicle approaching stops, the motor vehicle having a service brake device and a parking brake device (48) as well as a stop brake device (2), which, if a stop brake actuating element (26) is actuated by the driver, applies brake actuators (42) of the service brake device of at least one axle with a predetermined brake pressure, wherein at least some of the brake actuators (58) of the parking brake device (48) are pneumatically actuated spring brake cylinders, **characterised by**
a) at least one sensor device (90) for monitoring the brake pressure in at least one brake actuator (42) of the service brake device of the at least one axle, and by
b) a control unit (92) for controlling the at least one parking brake device (48) in such a way that
c) if the stop brake actuating element (26) is actuated, and if
d) the brake pressure monitored by the sensor device (90) is lower than a predetermined limit brake pressure, and if
e) the brake actuators (58) of the parking brake device (48) are released,
f) the control unit (92) outputs an application signal for the automatic application of the brake actuators (58) of the parking brake device (48), wherein
g) the stop brake device (2) comprises a pressure control module which is assigned to an axle or a wheel of the vehicle and which, on actuation of the stop brake actuating element by the driver, generates the predetermined brake pressure for the brake actuators (42) of the service brake device.

4. Brake device according to claim 3, **characterised in that** the control unit (92) is an electronic control unit and the application signal it outputs is an electric signal.

5. Brake device according to claim 4, **characterised in that** it is an electronically controlled braking system (EBS) with an electronic EBS control unit which is integrated into the control unit (92).

6. Brake device according to any of claims 3 to 5, **characterised in that** the parking brake device (48) is an electropneumatic parking brake device and the spring brake cylinders (58) of the parking brake device (48) are controlled as a function of the electric application signal output by the control unit (92).

7. Brake device according to any of the preceding claims, **characterised in that** the control unit (92) is integrated into an electronic control unit of the pressure control module or into a brake control unit.

## Revendications

1. Procédé pour faire fonctionner un dispositif (1) de freinage d'un véhicule arrivant à un point d'arrêt, comprenant un frein (42) de service et un frein (58) de stationnement, ainsi qu'une fonction de freinage de point d'arrêt supplémentaire par rapport à une fonction de frein de service, qui, lorsqu'elle est activée par le conducteur, serre avec une pression de freinage définie à l'avance le frein de service d'au moins un essieu, dans lequel au moins certains des actionneurs (58) du frein de stationnement sont des cylindres de frein à ressort accumulateur actionnés pneumatiquement, **caractérisé en ce que**
a) l'on contrôle la pression de freinage (42) de roue d'au moins l'essieu, dont les freins (42) de roue sont serrés si la fonction de frein de stationnement est activée et
b) si la fonction de frein de stationnement est activée et
c) si la pression de freinage contrôlée est plus petite qu'une pression de freinage limite donnée à l'avance, ainsi que
d) si le frein (58) de stationnement est desserré,
e) l'on émet un signal de serrage pour serrer automatiquement le frein (58) de stationnement, dans lequel
f) l'on émet d'une manière retardée dans le temps le signal de serrage automatique du frein (58) de stationnement.

2. Procédé suivant la revendication 1, **caractérisé en ce que,** supplémentairement aux conditions à satisfaire cumulativement suivant les lettres a) à d) de la revendication 1, on n'émet le signal de serrage automatique du frein (58) de stationnement que si le frein (42) de service n'est pas serré.

3. Dispositif (1) de freinage d'un véhicule arrivant à un point d'arrêt, comprenant un dispositif de frein de service, un dispositif (48) de frein de stationnement, ainsi qu'un dispositif (2) de frein au point d'arrêt, lequel, si un organe (26) d'actionnement du frein au point d'arrêt est actionné par le conducteur, serre avec une force de freinage définie à l'avance des actionneurs (42) de frein du dispositif de frein de service d'au moins un essieu, dans lequel au moins certains des actionneurs (58) de frein du dispositif (48) de frein de stationnement sont des cylindres de frein à ressort accumulateur actionnés pneumatiquement, **caractérisé par**
a) au moins un dispositif (90) capteur pour contrôler la pression de freinage dans au moins un actionneur (42) de frein du dispositif de freinage de service du au moins un essieu, ainsi que par
b) un dispositif (92) de commande conçu de manière à commander au moins le dispositif (48) de frein de stationnement de manière à ce que
c) si l'organe (26) d'actionnement du frein de point d'arrêt est actionné et
d) si la pression de freinage contrôlée par le dispositif (90) capteur est plus petite qu'une pression de freinage limite donnée à l'avance et
e) si les actionneurs (58) de frein du dispositif (48) de freinage de stationnement sont desserrés,
f) il est émis par le dispositif (92) de commande un signal de serrage automatique des actionneurs (58) de frein du dispositif (48) de frein de stationnement, dans lequel
g) le dispositif (2) de frein d'arrêt comprend un module de régulation de la pression qui est associé à un essieu ou à une roue du véhicule et qui, lorsque l'organe d'actionnement du frein de point d'arrêt est actionné par le conducteur, produit la pression de freinage définie à l'avance pour les actionneurs (42) de frein du dispositif de frein de service.

4. Dispositif de freinage suivant la revendication 3, **caractérisé en ce que** le dispositif (92) de commande est un dispositif de commande électronique et le signal de serrage qu'il émet un signal électrique.

5. Dispositif de freinage suivant la revendication 4, **caractérisé en ce que** c'est un système de freinage à régulation électronique (EBS) ayant un appareil de commande électronique EBS, dans lequel le dispositif (92) de commande électronique est intégré.

6. Dispositif de freinage suivant l'une des revendications 3 à 5, **caractérisé en ce que** le dispositif (48) de frein de stationnement est un dispositif de freinage de stationnement électropneumatique et les cylindres (58) de frein à ressort accumulateur du dispositif (48) de freinage de stationnement sont commandés en fonction du signal de serrage électrique émis par le dispositif (92) de commande.

7. Dispositif de freinage suivant l'une des revendications précédentes, **caractérisé en ce que** le dispositif (92) de commande est intégré dans un appareil de commande électronique du module de régulation de la pression ou dans un appareil de commande de frein.
